# EUROPEAN PATENT APPLICATION

(11) **EP 4 800 810 A1**
(43) Date of publication of application: **02.09.2026**
(21) Application number: 24887358.0
(22) Date of filing: 28.05.2024
(51) Int. Cl.: H01M 10/6554, H01M 10/6556

(54) **BATTERY PACK, ELECTRIC DEVICE AND ENERGY STORAGE DEVICE**

(30) Priority: 07.11.2023 CN 202323010808 U
(71) Applicant: Contemporary Amperex Technology Co., Limited, Ningde, Fujian 352100 (CN)
(72) Inventor: HUA, Wenqiang, Ningde, Fujian 352100 (CN); LUO, Hao, Ningde, Fujian 352100 (CN); PENG, Haoran, Ningde, Fujian 352100 (CN); ZHANG, Hua, Ningde, Fujian 352100 (CN)
(74) Representative: Gong, Jinping
(86) International application number: PCT/CN2024/095726
(87) International publication number: WO 2025/097734

(57) **Abstract**

This disclosure relates to the field of battery technologies and discloses a battery pack, an electric apparatus, and an energy storage apparatus. The battery pack includes a cell group and a cooling structure, the cooling structure including a casing assembly, an inlet flow channel, and an outlet flow channel. The casing assembly includes a flow plate, a mounting surface is formed on a surface of the flow plate, the mounting surface includes a cell heat exchange region and a first avoidance region, the cell group is disposed in the cell heat exchange region of the cooling structure, the cell heat exchange region is used for heat exchange with the cell group, and the first avoidance region is located outside a projection of the cell group toward the mounting surface along a thickness direction of the flow plate. The inlet flow channel is disposed in the flow plate corresponding to the cell heat exchange region. The outlet flow channel is disposed in the flow plate corresponding to the first avoidance region, the inlet flow channel and the outlet flow channel are used for flowing a heat exchange medium, and the inlet flow channel and the outlet flow channel are communicated to an external pipeline to form a circulation loop.

## Description

### CROSS-REFERENCE TO RELATED APPLICATIONS

This disclosure is based on Application No. 202323010808.1, filed on November 07, 2023, and entitled "COOLING STRUCTURE, BATTERY PACK, ELECTRIC APPARATUS, AND ENERGY STORAGE APPARATUS", and claims priority to the Chinese Patent application, which is incorporated herein by reference in its entirety.

### TECHNICAL FIELD

This disclosure relates to the field of battery technologies, and in particular, to a battery pack, an electric apparatus, and an energy storage apparatus.

### BACKGROUND

The application of new energy batteries in both daily life and industry is becoming increasingly widespread. For example, new energy vehicles equipped with batteries have been widely used, and batteries are also increasingly applied in the field of energy storage, among others.

During the use of batteries, or due to the influence of external environment, batteries generate heat. If the heat is too high, the charging or discharging power of the batteries is affected, the performance of the batteries is affected, and the reliability of the batteries is affected.

When thermal management is performed on batteries using cooling structures provided by related art, the temperature difference between cells in a cell group is relatively large.

### UTILITY MODEL CONTENT

In view of this, this disclosure provides a battery pack, an electric apparatus, and an energy storage apparatus, which can make the temperature difference of cells in a cell group smaller, leading to a higher consistency of service life of the cells, thereby improving the overall service life of the cell group.

This disclosure achieves the following technical solutions.

A first aspect of this disclosure provides a battery pack, including a cell group and a cooling structure, the cooling structure including a casing assembly, an inlet flow channel, and an outlet flow channel. The casing assembly includes a flow plate, a mounting surface is formed on a surface of the flow plate, the mounting surface includes a cell heat exchange region and a first avoidance region, the cell group is disposed in the cell heat exchange region of the cooling structure, the cell heat exchange region is used for heat exchange with the cell group, and the first avoidance region is located outside a projection of the cell group toward the mounting surface along a thickness direction of the flow plate. The inlet flow channel is disposed in the flow plate corresponding to the cell heat exchange region. The outlet flow channel is disposed in the flow plate corresponding to the first avoidance region, the inlet flow channel and the outlet flow channel are used for flowing a heat exchange medium, and the inlet flow channel and the outlet flow channel are communicated to an external pipeline to form a circulation loop.

In the battery pack provided by the embodiments of this disclosure, the mounting surface is divided into the cell heat exchange region and the first avoidance region corresponding to the inlet flow channel and the outlet flow channel. Only the cell heat exchange region is set to exchange heat with the cell group, and the first avoidance region is set not to exchange heat with the cell group. In this way, it can be ensured that the cell group exchanges heat only with the heat exchange medium in the inlet flow channel, but not with the heat exchange medium in the outlet flow channel, which can avoid the heat exchange medium in the outlet flow channel forming an effect of "reverse heating" or "reverse cooling" on the cell group, thereby improving the cooling or heating effect on the cell group and improving the cooling or heating efficiency of the cell group. At the same time, since the temperature of the heat exchange medium in the inlet flow channel is relatively close, so that the temperature difference of the cells in the cell group can be made smaller, the consistency of service life of the cells is higher, thereby improving the overall service life of the cell group.

In a possible implementation of this disclosure, a plurality of flow cavities extending along a first direction are arranged in the flow plate, a flow cavity located at a first end of the flow plate along a second direction among the plurality of flow cavities forms the outlet flow channel, at least part of the flow cavities in other flow cavities form the inlet flow channel, the first direction being perpendicular to the second direction, and flow directions of the inlet flow channel and the outlet flow channel being opposite.

In a possible implementation of this disclosure, the casing assembly further includes a first sealing member and a second sealing member, a plurality of partitions extending along the first direction are arranged in the flow plate, the flow cavity running through two ends of the flow plate is formed between adjacent partitions, the first sealing member is sealingly connected to one end of the flow plate corresponding to an inlet side of the inlet flow channel, and the second sealing member is sealingly connected to one end of the flow plate corresponding to an outlet side of the inlet flow channel.

In a possible implementation of this disclosure, the casing assembly further includes a first limiting protrusion, the first limiting protrusion is disposed at the first end of the flow plate along the second direction, the first avoidance region is located within a projection of the first limiting protrusion toward the mounting surface along the thickness direction of the flow plate, and the first limiting protrusion is configured to limit the cell group in the cell heat exchange region.

In a possible implementation of this disclosure, the casing assembly further includes a second limiting protrusion, the second limiting protrusion is disposed at a second end of the flow plate along the second direction, and the first limiting protrusion and the second limiting protrusion are configured to limit the cell group in the cell heat exchange region.

In a possible implementation of this disclosure, the mounting surface further includes a second avoidance region, the second avoidance region is located within a projection of the second limiting protrusion toward the mounting surface along the thickness direction of the flow plate; and the partition includes a second avoidance partition, a projection of the second avoidance partition toward the mounting surface along the thickness direction of the flow plate is located in the second avoidance region, and one end of the second avoidance partition close to the second sealing member is sealingly connected to the second sealing member.

In a possible implementation of this disclosure, the partition further includes a first avoidance partition and a cell heat exchange partition, a projection of the first avoidance partition toward the mounting surface along the thickness direction of the flow plate is located in the first avoidance region, and a projection of the cell heat exchange partition toward the mounting surface along the thickness direction of the flow plate is located in the cell heat exchange region; one end of the first avoidance partition close to the first sealing member is sealingly connected to the first sealing member, and a gap is provided between one end of the first avoidance partition close to the second sealing member and the second sealing member; and gaps are provided between two ends of the cell heat exchange partition and the first sealing member and the second sealing member, respectively.

In a possible implementation of this disclosure, an inlet is provided at one end of the flow plate close to the first sealing member corresponding to the inlet flow channel; an outlet is provided at one end of the flow plate close to the first sealing member corresponding to the outlet flow channel; and along the second direction in a direction from the inlet pointing to two ends of the inlet flow channel, a gap between the first sealing member and a preceding partition among all partitions included in the cell heat exchange partition and the second avoidance partition is greater than or equal to a gap between a subsequent partition and the first sealing member.

In a possible implementation of this disclosure, along the second direction in a direction from the inlet flow channel pointing to the outlet flow channel, a gap between the second sealing member and a preceding partition among all partitions included in the cell heat exchange partition and the first avoidance partition is less than or equal to a gap between a subsequent partition and the second sealing member.

In a possible implementation of this disclosure, the inlet is aligned with a flow cavity farthest from the outlet flow channel, the number of the second avoidance partitions is the same as the number of the first avoidance partitions, and n is the number of partitions having a gap with the first sealing member or the second sealing member; in the case of 5≤n<10, along the second direction in a direction from the inlet flow channel pointing to the outlet flow channel, gaps between a first partition and a second partition and the first sealing member are the same; in the case of 10≤n<16, along the second direction in a direction from the inlet flow channel pointing to the outlet flow channel, gaps between a first partition, a second partition, and a third partition, respectively, and the first sealing member are the same; along the second direction in a direction from the outlet flow channel pointing to the inlet flow channel, gaps between a second partition and a third partition and the second sealing member are the same; in the case of 16≤n, along the second direction in a direction from the inlet flow channel pointing to the outlet flow channel, gaps between a first partition, a second partition, a third partition, and a fourth partition, respectively, and the first sealing member are the same; and along the second direction in a direction from the outlet flow channel pointing to the inlet flow channel, gaps between a second partition, a third partition, and a fourth partition and the second sealing member are the same.

In a possible implementation of this disclosure, the flow plate is formed by splicing at least two flow sub-plates arranged along the first direction or the second direction.

In a possible implementation of this disclosure, the first sealing member includes a first base and a first boss, the first boss protrudes from the first base and is embedded in one end of the flow plate corresponding to the first sealing member; and/or, the second sealing member includes a second base and a second boss, the second boss protrudes from the second base and is embedded in one end of the flow plate corresponding to the second sealing member.

In a possible implementation of this disclosure, a range of a gap between a partition having a gap with the first sealing member and the first sealing member is 1.5 mm to 45 mm; and/or, a range of a gap between a partition having a gap with the second sealing member and the first sealing member is 1.5 mm to 45 mm.

In a possible implementation of this disclosure, among partitions having a gap with the first sealing member, a difference in gaps between adjacent partitions and the first sealing member is 0 to 5 mm; and/or, among partitions having a gap with the second sealing member, a difference in gaps between adjacent partitions and the second sealing member is 0 to 5 mm.

In a possible implementation of this disclosure, along the thickness direction of the flow plate, a height of the flow cavity is 4 mm to 10 mm.

In a possible implementation of this disclosure, the flow plate and the partition are an integral structure, and the flow plate and the partition are made by an extrusion process.

In a possible implementation of this disclosure, a first limiting protrusion is provided at the first end of the flow plate along the second direction, a second limiting protrusion is provided at the second end of the flow plate along the second direction, and the first limiting protrusion and the second limiting protrusion are configured to limit the cell group within a first region.

In a possible implementation of this disclosure, the first limiting protrusion and the second limiting protrusion each include a first connection portion and a second connection portion, the first connection portion is connected to the mounting surface, a projection of the first connection portion toward the mounting surface along the thickness direction of the flow plate is located within the mounting surface; a projection of the second connection portion toward the mounting surface along the thickness direction of the flow plate is located outside the mounting surface, and the second connection portion is configured to install other structural members.

In a possible implementation of this disclosure, the flow plate, the first limiting protrusion, and the second limiting protrusion are an integral structure, and the flow plate, the first limiting protrusion, and the second limiting protrusion are made by an extrusion process.

A second aspect of this disclosure provides an electric apparatus, the electric apparatus including the battery pack provided in the first aspect.

A third aspect of this disclosure provides an energy storage apparatus, the energy storage apparatus including the battery pack provided in the first aspect.

Since the electric apparatus or energy storage apparatus provided by the embodiments of this disclosure includes the battery pack provided in any one of the first aspect, it has the same technical effects, which can make the temperature difference of cells in the cell group smaller, leading to a higher consistency of service life of the cells, thereby improving the overall service life of the cell group.

### DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this disclosure. In addition, in all the accompanying drawings, the same reference signs represent the same components. In the accompanying drawings:
FIG. 1 is a top view of a cooling structure of a battery pack provided by some embodiments of this disclosure for cooling a cell group;
FIG. 2 is a schematic exploded view of a cooling structure of a battery pack provided by some embodiments of this disclosure;
FIG. 3 is a first schematic cross-sectional diagram of a cooling structure of a battery pack provided by some embodiments of this disclosure;
FIG. 4 is a schematic diagram of division of a cell heat exchange region, a first avoidance region, and a second avoidance region of a cooling structure of a battery pack provided by some embodiments of this disclosure;
FIG. 5 is a schematic diagram of a cooling structure of a battery pack in related art;
FIG. 6 is an enlarged schematic view at position A in FIG. 2;
FIG. 7 is a second schematic cross-sectional diagram of a cooling structure of a battery pack provided by some embodiments of this disclosure; and
FIG. 8 is an enlarged schematic view at position B in FIG. 7.

Reference signs are as follows:
01-cell group; 1-casing assembly; 11-flow plate; 111-mounting surface; 1111-cell heat exchange region; 1112-first avoidance region; 1113-second avoidance region; 112-flow cavity; 11a-flow sub-plate; 113-partition; 1131-first avoidance partition; 1132-cell heat exchange partition; 1133-second avoidance partition; 114-first end of flow plate along second direction; 115-second end of flow plate along second direction; 12-first limiting protrusion; 121-first connection portion; 122-second connection portion; 13-second limiting protrusion; 14-first sealing member; 15-second sealing member; 151-second base; 152-second boss; 2-inlet flow channel; 3-outlet flow channel; 4-inlet; 5-outlet; a-first direction; and b-second direction.

### DESCRIPTION OF EMBODIMENTS

The following will describe the embodiments of the technical solutions of this disclosure in detail with reference to the accompanying drawings. The following embodiments are merely intended for a clearer description of the technical solutions of this disclosure and therefore are merely used as examples which do not constitute any limitation on the protection scope of this disclosure.

Unless otherwise defined, all technical and scientific terms used herein shall have the same meanings as commonly understood by persons skilled in the art to which this disclosure relates. The terms used herein are intended to merely describe the specific embodiments rather than to limit this disclosure. The terms "include", "comprise", and "have" and any other variations thereof in the specification, claims and brief description of drawings of this disclosure are intended to cover non-exclusive inclusions.

In the descriptions of the embodiments of this disclosure, the technical terms "first", "second", "third", and the like are merely intended to distinguish between different objects, and shall not be understood as any indication or implication of relative importance or any implicit indication of the number, specific sequence, or primary-secondary relationship of the technical features indicated. In the description of the embodiments of this disclosure, "a plurality of" means at least two unless otherwise specifically stated.

In this specification, "embodiment" means that specific features, structures, or characteristics described with reference to the embodiment may be included in at least one embodiment of this disclosure. The word "embodiment" appearing in various places in the specification does not necessarily refer to the same embodiment or an independent or alternative embodiment that is exclusive of other embodiments. It is explicitly or implicitly understood by persons skilled in the art the embodiments described herein may be combined with other embodiments.

In the description of the embodiments of this disclosure, the term "and/or" is only an associative relationship for describing associated objects, indicating that three relationships may be present. For example, A and/or B may indicate the following three cases: presence of only A, presence of both A and B, and presence of only B. In addition, a character "/" in this specification generally indicates an "or" relationship between contextually associated objects.

In the description of the embodiments of this disclosure, the technical terms "length", "width", "thickness", "upper", "lower", "front", "rear", "left", "right", "vertical", "horizontal", "top", "bottom", "inner", "outer", "circumferential", and the like indicate orientation or positional relationships based on the orientation or positional relationships shown in the accompanying drawings, and are only for the convenience of describing the embodiments of this disclosure and simplifying the description, and are not intended to indicate or imply that the referred device or element must have a specific orientation, be constructed, operated, or used in a specific orientation. Therefore, it should not be understood as a limitation on the embodiments of this disclosure.

In the description of the embodiments of this disclosure, unless otherwise specified and defined explicitly, the terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Persons of ordinary skill in the art can understand specific meanings of the foregoing terms in the embodiments of this disclosure as appropriate to specific situations.

In the description of the embodiments of this disclosure, unless otherwise specified and defined explicitly, the technical term "contact" should be understood in a general sense, which can be direct contact or contact through an intermediate medium layer, can be contact with essentially no interaction force between the two contacting parties, or can be contact with interaction force between the two contacting parties.

Below, this disclosure is described in detail.

Currently, the application of new energy batteries in both daily life and industry is becoming increasingly widespread. New energy batteries have been widely used in not only energy storage power systems such as hydroelectric, thermal, wind, and solar power plants, but also other fields including electric transportation tools such as electric bicycles, electric motorcycles and electric vehicles, military equipment, and aerospace. With the continuous expansion of application fields of traction batteries, market demands for traction batteries are also expanding.

In many application scenarios, a plurality of cell groups may be arranged and combined to form a battery pack for use, which can increase the capacity of the battery pack. Generally, for ease of description, the battery in the embodiments of this disclosure may generally refer to a cell or a battery pack.

It should be noted that the battery in the embodiments of this disclosure may be, but is not limited to, used in electric apparatuses such as energy storage power systems, vehicles, ships, or aircraft. The battery pack may also be, but is not limited to, used in electric apparatuses such as energy storage power systems, vehicles, ships, or aircraft. Using the battery pack can provide higher total energy. In addition, the battery pack is formed by disposing a plurality of grouped cells in a sealed box, thereby having more reliable dustproof and waterproof performance, and therefore can be applied to scenarios with harsher, humid, or even water-immersed use environments.

In a battery, a plurality of cells may be provided, and the plurality of cells may be connected in series, parallel, or series-parallel, where being connected in series-parallel means a combination of series and parallel connections of the plurality of cells. The plurality of cells may be directly connected in series, parallel, or series-parallel; or certainly, the battery may be formed by a plurality of cells being connected in series, parallel, or series-parallel first to form a battery module and then a plurality of battery modules being connected in series, parallel, or series-parallel to form an entirety which is accommodated in the box. The battery may also include other structures. For example, the battery may further include a busbar configured to implement electrical connection between the plurality of cells. In this disclosure, a cell may also be referred to as a battery cell.

In the embodiments of this disclosure, the cell may be a secondary battery, and the secondary battery refers to a battery cell whose active material can be activated for continuous use through charging after the battery cell is discharged.

The cell may be a lithium-ion battery, a sodium-ion battery, a lithium-sodium-ion battery, a lithium metal battery, a sodium metal battery, a lithium-sulfur battery, a magnesium-ion battery, a nickel-hydrogen battery, a nickel-cadmium battery, a lead-acid battery, and the like. This is not limited in the embodiments of this disclosure.

An electrode assembly includes a positive electrode, a negative electrode, and a separator. In a charge and discharge process of the battery cell, active ions (for example, lithium ions) are intercalated and deintercalated between the positive electrode and the negative electrode. The separator is arranged between the positive electrode and the negative electrode to prevent short circuit of the positive electrode and negative electrode and to allow the active ions to pass through.

In some embodiments, the electrode assembly includes tabs, and the tabs can lead current out of the electrode assembly. The tabs include a positive tab and a negative tab.

In some embodiments, the battery cell may include a shell. The shell is configured to encapsulate the electrode assembly, the electrolyte, and other components. The shell may be steel shell, aluminum shell, plastic shell (for example, polypropylene), composite metal shell (for example, copper-aluminum composite shell), aluminum-plastic film, or the like. The shell may also include a casing body and a cover body, and an accommodating cavity may be formed between the casing body and the cover body. Further, a terminal may be provided on the cover body.

In an example, the battery cell may be a cylindrical battery cell, a prismatic battery cell, a pouch battery cell, or a battery cell of another shape. The prismatic battery cell includes a square-shell battery cell, a blade-shaped battery cell, a polygonal prism battery, such as a hexagonal prism battery. This is not particularly limited in this disclosure.

During charging or discharging of a cell, the cell generates heat, and a cooling structure is generally provided to cool the cell. However, in the cooling structure provided by related art, the cell cannot be effectively cooled.

In view of this, the embodiments of this disclosure provide a battery pack, which can make the temperature difference of cells in a cell group smaller, leading to a higher consistency of service life of the cells, thereby improving the overall service life of the cell group.

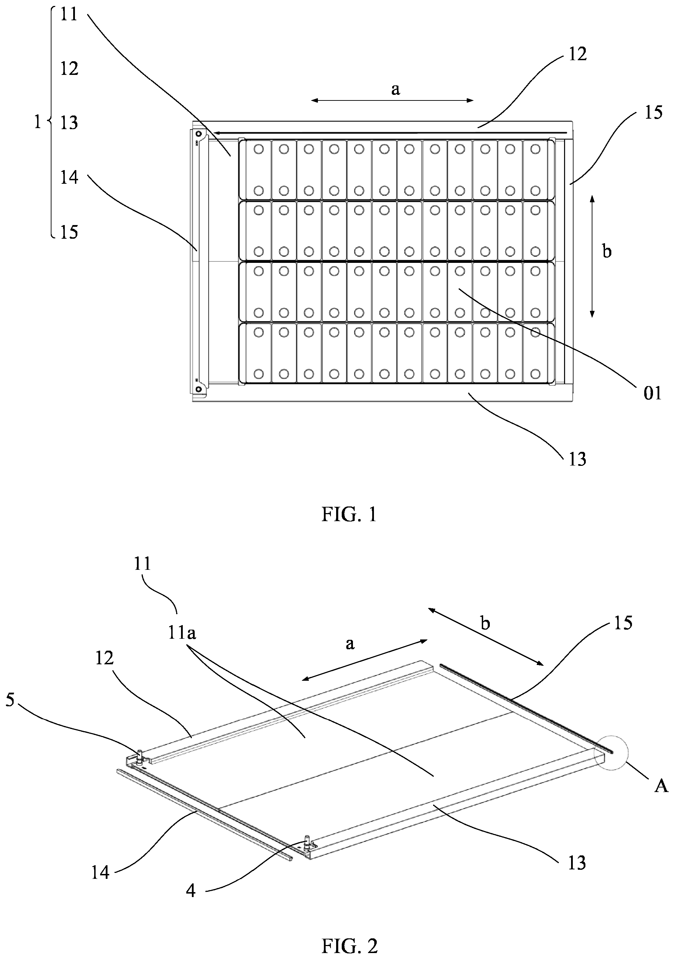

Below, some embodiments of this disclosure are described in detail with reference to FIG. 1 to FIG. 8.

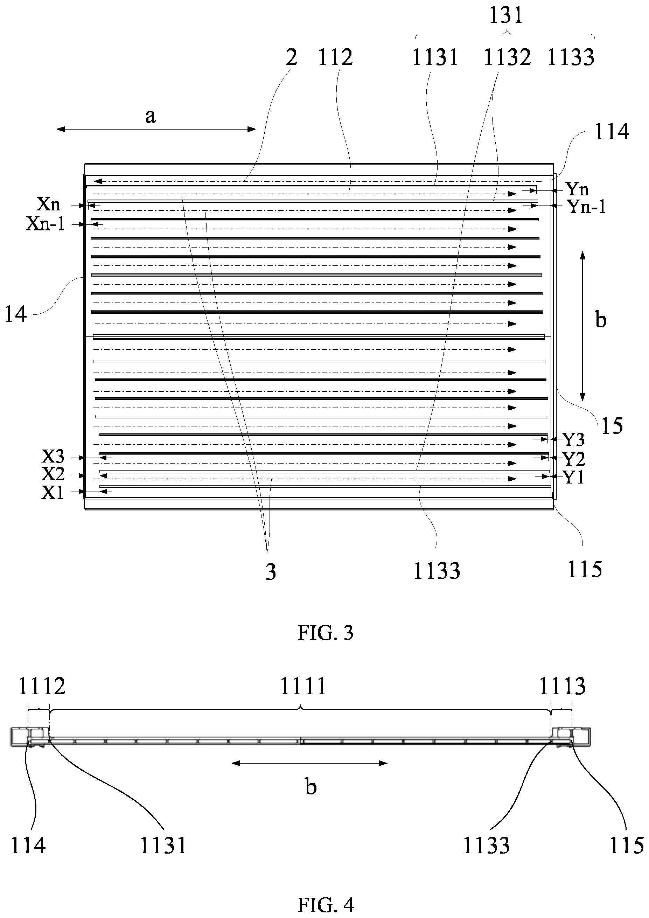

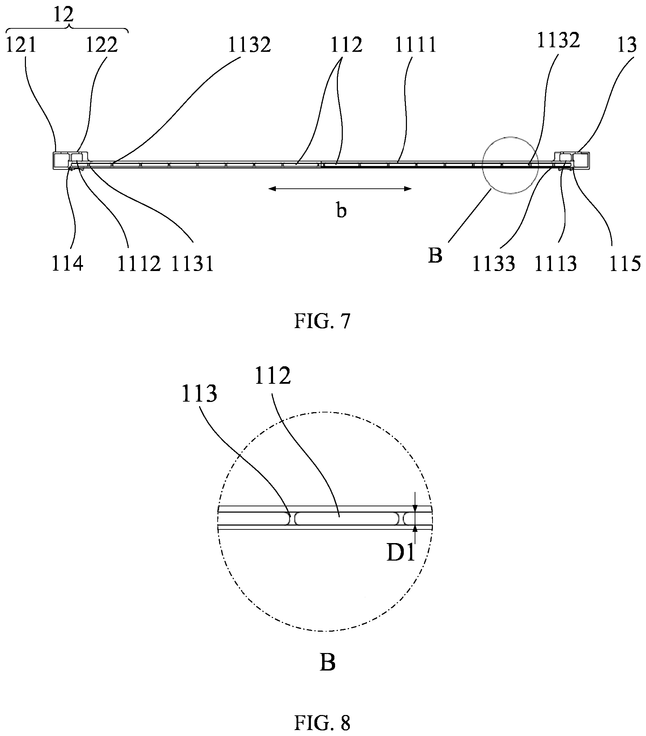

Specifically, referring to FIG. 1 to FIG. 3, the battery pack provided by the embodiments of this disclosure includes a cell group and a cooling structure, the cooling structure including a casing assembly 1, an inlet flow channel 2, and an outlet flow channel 3. The casing assembly 1 includes a flow plate 11, a mounting surface 111 is formed on a surface of the flow plate 11. Referring to FIG. 4 and FIG. 7, the mounting surface 111 includes a cell heat exchange region 1111 and a first avoidance region 1112, the cell group 01 is disposed in the cell heat exchange region 1111 of the cooling structure, the cell heat exchange region 1111 is used for heat exchange with the cell group 01, and the first avoidance region 1112 is located outside a projection of the cell group 01 toward the mounting surface 111 along a thickness direction of the flow plate 11. The inlet flow channel 2 is disposed in the flow plate 11 corresponding to the cell heat exchange region 1111, and the outlet flow channel 3 is disposed in the flow plate 11 corresponding to the first avoidance region 1112. The inlet flow channel 2 and the outlet flow channel 3 are used for flowing a heat exchange medium, and the inlet flow channel 2 and the outlet flow channel 3 are communicated to an external pipeline to form a circulation loop.

It should be noted that in the embodiments of this disclosure, the shape of the main structure of the casing assembly 1 is not limited. For example, referring to FIG. 2, the shape of the main structure of the casing assembly 1 may be set to a plate-shaped structure, and the shape of the main structure of the casing assembly 1 may be set according to the arrangement shape of the cell group 01.

It can be understood that in the embodiments of this disclosure, the casing assembly 1 of the cooling structure may refer to casings of all components of the cooling structure, for which all components of the cooling structure may be set as an integral structure to form an overall casing assembly 1. In addition, all components of the cooling structure may be set as separate structures, assembled together to form the casing assembly 1, and the embodiments of this disclosure are not limited thereto.

On this basis, the mounting surface 111 of the flow plate 11 refers to a surface on one side of the flow plate 11 for installing the cell group 01. For example, referring to FIG. 2, for setting the main structure of the flow plate 11 as a cuboid, the mounting surface 111 may refer to an upper surface of the flow plate 11. For the mounting surface 111, the mounting surface 111 may be divided into different regions to achieve different functions respectively. Specifically, in the embodiments of this disclosure, the mounting surface 111 includes the cell heat exchange region 1111 and the first avoidance region 1112, where the cell heat exchange region 1111 is used for heat exchange with the cell group 01, and the first avoidance region 1112 is located outside the projection of the cell group 01 toward the mounting surface 111 along the thickness direction of the flow plate 11. It should be noted that in addition to the above cell heat exchange region 1111 and first avoidance region 1112, the mounting surface 111 may also include other regions.

It should be noted that the cell heat exchange region 1111 here being used for heat exchange with the cell group 01 may refer to the cell heat exchange region 1111 being in thermal conductive contact with the cell group 01. For example, the cell group 01 may be directly installed in the cell heat exchange region 1111, or indirectly contacted through a medium such as connection glue or thermal conductive glue. In addition, the first avoidance region 1112 being located outside the projection of the cell group 01 toward the mounting surface 111 along the thickness direction of the flow plate 11 can be understood as the cell group 01 not contacting the first avoidance region 1112. Referring to FIG. 1, it can be considered that along the thickness direction of the flow plate 11, the projection of the cell group 01 toward the mounting surface is within the cell heat exchange region 1111, and the projection of the cell group 01 toward the mounting surface is outside the first avoidance region 1112. In this way, it can be considered that the first avoidance region 1112 does not directly exchange heat with the cell group, and only the cell heat exchange region 1111 exchanges heat with the cell group 01.

Furthermore, in the application embodiments, an inlet flow channel 2 and an outlet flow channel 3 are also provided in the flow plate 11, and the inlet flow channel 2 and the outlet flow channel 3 are communicated, which can be used for the heat exchange medium to flow in the flow plate 11. At the same time, in the embodiments of this disclosure, the inlet flow channel 2 is also disposed corresponding to the cell heat exchange region 1111, and the outlet flow channel 3 is disposed corresponding to the first avoidance region 1112.

For example, referring to FIG. 4 and FIG. 7, the inlet flow channel 2 being disposed corresponding to the cell heat exchange region 1111 can be considered as a projection of the inlet flow channel 2 toward the mounting surface 111 overlapping with the cell heat exchange region 1111; and the outlet flow channel 3 being disposed corresponding to the first avoidance region 1112 can be considered as a projection of the outlet flow channel 3 toward the mounting surface 111 overlapping with the first avoidance region 1112.

It should be noted that in the embodiments of this disclosure, the extension directions of the inlet flow channel 2 and the outlet flow channel 3 are not limited, the extension directions of the inlet flow channel 2 and the outlet flow channel 3 may be different. For example, the extension directions of the inlet flow channel 2 and the outlet flow channel 3 may be set to be opposite, or the extension directions of the inlet flow channel 2 and the outlet flow channel 3 may be set to have an angle. For example, as shown in FIG. 3, the extension directions of the inlet flow channel 2 and the outlet flow channel 3 may be processed to be opposite.

On this basis, in the cooling structure of the battery pack provided by the embodiments of this disclosure, the inlet flow channel 2 and the outlet flow channel 3 are communicated to an external pipeline to form a circulation loop, so that thermal management can be performed on the cell group 01.

It should be noted that performing thermal management on the cell group 01 includes heating or cooling the cell group 01, when the temperature of the heat exchange medium flowing in the cooling structure is higher than the temperature of the cell group 01, the heat exchange medium heats the cell group 01; and when the temperature of the heat exchange medium flowing in the cooling structure is lower than the temperature of the cell group 01, the heat exchange medium cools the cell group 01.

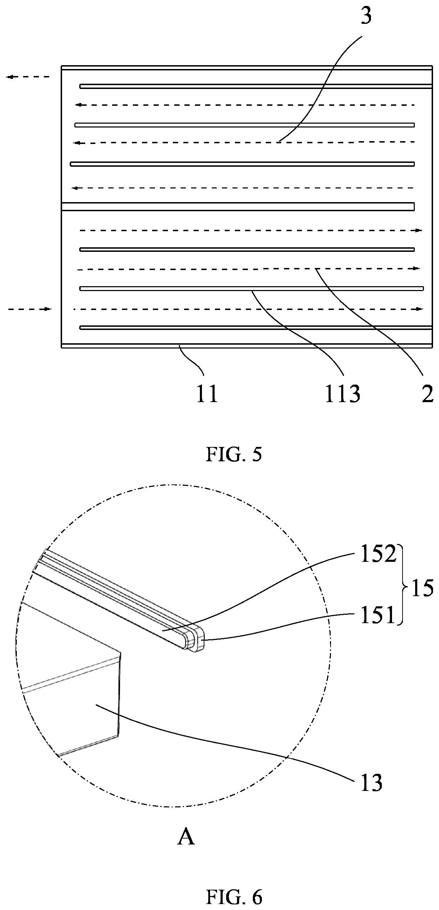

Referring to FIG. 5, which is a cooling structure provided in related art, in this cooling structure, the entire surface on one side of the flow plate 11 exchanges heat with the cell group 01, and along a flow direction of the heat exchange medium, the temperature of the heat exchange medium gradually increases when the heat exchange medium cools the cell group; and when the heat exchange medium heats the cell group, the temperature of the heat exchange medium gradually decreases, and the temperature of the heat exchange medium in the outlet flow channel 3 has a large temperature difference with the temperature of the heat exchange medium in the inlet flow channel 2 to a large extent, and the cell group 01 exchanges heat with both the heat exchange medium in the inlet flow channel 2 and the heat exchange medium in the outlet flow channel 3 at the same time, leading to a larger temperature difference between cells in the cell group 01, thereby possibly leading to different service lives between the cells and affecting the entire service life of the cell group 01.

In the cooling structure of the battery pack provided by the embodiments of this disclosure, the mounting surface 111 is divided into the cell heat exchange region 1111 and the first avoidance region 1112 corresponding to the inlet flow channel 2 and the outlet flow channel 3. Only the cell heat exchange region 1111 is set to exchange heat with the cell group 01, and the first avoidance region 1112 is set not to exchange heat with the cell group 01. In this way, it can be ensured that the cell group 01 exchanges heat only with the heat exchange medium in the inlet flow channel 2, but not with the heat exchange medium in the outlet flow channel 3, which can avoid the heat exchange medium in the outlet flow channel 3 forming an effect of "reverse heating" or "reverse cooling" on the cell group 01, thereby improving the cooling or heating effect on the cell group 01 and improving the cooling or heating efficiency of the cell group 01. At the same time, since the temperature of the heat exchange medium in the inlet flow channel 2 is relatively close, so that the temperature difference of the cells in the cell group 01 can be made smaller, the consistency of service life of the cells is higher, thereby improving the overall service life of the cell group 01.

On this basis, in the cooling structure of the battery pack provided by the embodiments of this disclosure, a plurality of flow cavities 12 extending along a first direction a are arranged in the flow plate 11, a flow cavity 12 located at a first end 114 of the flow plate 11 along a second direction b among the plurality of flow cavities 12 forms the outlet flow channel 3, and at least part of the flow cavities 12 in other flow cavities 12 form the inlet flow channel 2, the first direction a being perpendicular to the second direction b, and flow directions of the inlet flow channel 2 and the outlet flow channel 3 being opposite.

For the flow cavity 12, it can be considered that the flow cavity 12 is a hole-like structure provided in the flow plate 11, and a plurality of hole-like structures may be arranged in the flow plate 11 to form a plurality of flow cavities 12.

Here, the first direction a can be considered as an extension direction of a flow cavity 12 or an axial direction of a flow cavity 12; and the second direction b can be considered as an arrangement direction of the flow cavities 12. The first direction a is perpendicular to the second direction b.

For example, referring to FIG. 1, the cooling structure of the battery pack provided by the embodiments of this disclosure can be used for square-shell cells. According to the arrangement characteristics of square-shell cells, the main structure of the flow plate 11 can be set as a thin plate-shaped cubic structure.

Furthermore, different flow cavities 12 are allocated, so that part of the flow cavities 12 can form the outlet flow channel 3, and part of the flow cavities 12 can form the inlet flow channel 2. It should be noted that according to the characteristics of the direction of the flow cavities 12, the flow directions of the inlet flow channel 2 and the outlet flow channel 3 here are opposite.

Referring to FIG. 3, in the embodiments of this disclosure, the flow cavity 12 located at the first end 114 of the flow plate 11 along the second direction b among the plurality of flow cavities 12 forms the outlet flow channel 3. It should be noted that the flow cavity 12 at the first end 114 of the flow plate 11 along the second direction b here is relative, and the number of the flow cavities 12 at the first end 114 of the flow plate 11 along the second direction b may be one, or two or more.

It should be noted that for all the flow cavities 12, the purpose of allocating the flow cavities 12 into the inlet flow channel 2 and the outlet flow channel 3 can be achieved by changing the series connection or parallel connection between adjacent flow cavities 12.

Specifically, referring to FIG. 3, the left end of the uppermost flow cavity 12 can be isolated from the left ends of other flow cavities 12, the left ends of other flow cavities 12 except the uppermost flow cavity 12 are communicated, and at the same time, the right ends of all flow cavities 12 are communicated. In this way, other flow cavities 12 except the uppermost flow cavity 12 form an inlet flow channel 2 in which a plurality of flow cavities 12 are connected in parallel, and the uppermost flow cavity 12 forms the outlet flow channel 3.

In this way, in the cooling structure of the battery pack provided by the embodiments of this disclosure, a plurality of flow cavities 12 are provided in the flow plate 11, so that the structure of the flow plate 11 can be regular, which is convenient for manufacturing the flow plate 11. At the same time, the plurality of flow cavities 12 are allocated to form the outlet flow channel 3 and the inlet flow channel 2, which is also convenient for setting the outlet flow channel 3 and the inlet flow channel 2.

On this basis, in order to facilitate manufacturing or processing the flow plate 11, in some embodiments of this disclosure, the flow plate 11 is also set as separate parts.

Specifically, referring to FIG. 2, in the embodiments of this disclosure, the casing assembly 1 further includes a first sealing member 14 and a second sealing member 15, a plurality of partitions 113 extending along the first direction a are arranged in the flow plate 11, the flow cavity 12 running through two ends of the flow plate 11 is formed between adjacent partitions 113, the first sealing member 14 is sealingly connected to one end of the flow plate 11 corresponding to an inlet side of the inlet flow channel 2, the second sealing member 15 is sealingly connected to one end of the flow plate 11 corresponding to an outlet side of the inlet flow channel 2, and the mounting surface 111 is provided on the surface of the flow plate 11.

For example, referring to FIG. 2 and FIG. 3, in the embodiments of this disclosure, it can be considered that the interior of the flow plate 11 is a hollow structure. A plurality of partitions 113 are provided, and the space in the flow plate 11 can be divided into a plurality of smaller spaces, so that each smaller space forms the flow cavity 12 running through two ends of the flow plate 11.

It should be noted that in the embodiments of this disclosure, the cross-sectional shape of the flow plate 11 is not limited. For example, referring to FIG. 7, the cross-sectional shape of the flow plate 11 may be set as a rectangle. In addition, two ends of the flow plate 11 along the second direction b may also be set as arcs, or the like. For example, referring to FIG. 7, the flow plate 11 in the application embodiments may be set as a harmonica tube structure.

Furthermore, in the embodiments of this disclosure, the cross-sectional shape of the partition 113 is also not limited. It can be understood that the partition 113 simultaneously forms a side wall of the flow cavity 12, and the cross-sectional shape of the partition 113 also determines the cross-sectional shape of the flow cavity 12. For example, the cross-sectional shape of the partition 113 may be set as a rectangle. In addition, referring to FIG. 7 and FIG. 8, the side of the cross-section of the partition 113 corresponding to the flow cavity 12 may also be set as a concave arc, so that the cross-sectional shape of the flow cavity 12 is relatively smooth, thereby reducing the flow resistance of the flow cavity 12.

It should be noted that one end of the flow plate 11 corresponding to an inlet side of the inlet flow channel 2 refers to one end of the flow plate 11 located on the same side as the inlet side of the inlet flow channel 2; and one end of the flow plate 11 corresponding to an outlet side of the inlet flow channel 2 refers to one end of the flow plate 11 located on the same side as the outlet side of the inlet flow channel 2. The inlet side and outlet side of the inlet flow channel 2 can be determined according to the flow direction of the heat exchange medium in the inlet flow channel 2, the side of the inlet flow channel 2 located upstream in the flow direction of the heat exchange medium is the inlet side of the inlet flow channel 2; and the side of the inlet flow channel 2 located downstream in the flow direction of the heat exchange medium is the outlet side of the inlet flow channel 2.

For example, referring to FIG. 3, the left side of the inlet flow channel 2 is the inlet side of the inlet flow channel 2, and the right side of the inlet flow channel 2 is the outlet side of the inlet flow channel 2. Correspondingly, the first sealing member 14 is sealingly connected to the left end of the flow plate 11, and the second sealing member 15 is sealingly connected to the right end of the flow plate 11.

In addition, in the embodiments of this disclosure, the specific structural forms of the first sealing member 14 and the second sealing member 15 are also not limited. Specifically, the first sealing member 14 may be manufactured according to the shape of one end of the flow plate 11 corresponding to the inlet side of the inlet flow channel 2, and the second sealing member 15 may be manufactured according to the shape of one end of the flow plate 11 corresponding to the outlet side of the inlet flow channel 2.

For example, referring to FIG. 2 and FIG. 6, in some embodiments of this disclosure, the first sealing member 14 and the second sealing member 15 may be set as elongated plate-shaped structures.

In addition, it should be noted that in the embodiments of this disclosure, the manner in which the first sealing member 14 is sealingly connected to the flow plate 11 is not limited. For example, the sealing connection between the first sealing member 14 and the flow plate 11 may be achieved by a connection manner such as welding connection or fastener connection. Similarly, the sealing connection between the second sealing member 15 and the flow plate 11 may also be achieved by a connection manner such as welding connection or fastener connection.

It can be understood that in the embodiments of this disclosure, a gap may be provided between the partition 113 and the first sealing member 14 or the second sealing member 15, so that through the gap, communication between two flow cavities 12 adjacent to the partition 113 can be achieved. In addition, there may be no gap between the partition 113 and the first sealing member 14 or the second sealing member 15, a hole is provided in the partition 113, so that communication between two flow cavities 12 adjacent to the partition 113 can be achieved through the hole. On this basis, the above manner can be used to achieve parallel connection or series connection between different flow cavities 12, and all the flow cavities 12 can be allocated to form the above inlet flow channel 2 and outlet flow channel 3.

In this way, in the cooling structure of the battery pack provided by the embodiments of this disclosure, the casing assembly 1 is set to include the flow plate 11, the first sealing member 14, and the second sealing member 15, so that the structure of the cooling structure of the battery pack provided by the embodiments of this disclosure can be simple and convenient to manufacture. At the same time, the partition 113 is provided in the flow plate 11 to form the flow cavities 12, so that the structure of the flow cavities 12 can also be simple and convenient to manufacture.

It can be understood that in the embodiments of this disclosure, it is also equivalent to reducing the flow path of the heat exchange medium. Comparing FIG. 3 and FIG. 5, the cooling structure of the battery pack provided by the embodiments of this disclosure is equivalent to reducing 50% of the flow path, which can also improve the cooling efficiency of the cell group 01.

In addition, in some embodiments of this disclosure, the casing assembly 1 further includes a first limiting protrusion 12, the first limiting protrusion 12 is disposed at the first end 114 of the flow plate 11 along the second direction b, the first avoidance region 1112 is located within a projection of the first limiting protrusion 12 toward the mounting surface 111 along the thickness direction of the flow plate 11, and the first limiting protrusion 12 is configured to limit the cell group 01 in the cell heat exchange region 1111.

It should be noted that the first limiting protrusion 12 may be correspondingly provided according to the edge position of the first avoidance region 1112.

It can be considered that the function of the first limiting protrusion 12 is to prevent the cell group 01 from contacting the first avoidance region 1112. Therefore, the first limiting protrusion 12 may be disposed corresponding to the first avoidance region 1112, so that the first limiting protrusion 12 shields the first avoidance region 1112.

It can be understood that the first limiting protrusion 12 is a protrusion structure provided on the mounting surface 111, for which the first limiting protrusion 12 may be set to be aligned with the first avoidance region 1112; the first limiting protrusion 12 may also be set to exceed the first avoidance region 1112, so that the first limiting protrusion 12 covers part of the cell heat exchange region 1111. In the above two setting manners, the first avoidance region 1112 is located within the projection of the first limiting protrusion 12 toward the mounting surface 111 along the thickness direction of the flow plate 11.

In this way, the first limiting protrusion 12 is provided, the position of the cell group 01 on the mounting surface 111 can be limited, so that the cell group 01 only comes into contact with the cell heat exchange region 1111 but not with the first avoidance region 1112, thereby facilitating the installation of the cell group 01 on the cooling structure.

On this basis, in the embodiments of this disclosure, the casing assembly 1 further includes a second limiting protrusion 13, the second limiting protrusion 13 is disposed at a second end 115 of the flow plate 11 along a second direction b, and the first limiting protrusion 12 and the second limiting protrusion 13 are configured to limit the cell group 01 in the cell heat exchange region 1111.

It can be understood that the second limiting protrusion 13 is a protrusion structure provided at the second end 115 of the flow plate 11 along the second direction b. It should be noted that in the embodiments of this disclosure, the shapes of the second limiting protrusion 13 and the first limiting protrusion 12 may be set to be the same, or the shapes of the second limiting protrusion 13 and the first limiting protrusion 12 may be different, and the embodiments of this disclosure are not limited thereto.

Furthermore, referring to FIG. 1, an installation space is formed between the first limiting protrusion 12 and the second limiting protrusion 13, and therefore, the first limiting protrusion 12 and the second limiting protrusion 13 can be used to limit the cell group 01 between the first limiting protrusion 12 and the second limiting protrusion 13.

In this way, in the embodiments of this disclosure, the first limiting protrusion 12 and the second limiting protrusion 13 are provided at two ends of the communication plate respectively, and the cell group 01 can be better limited along the second direction.

On this basis, in the embodiments of this disclosure, referring to FIG. 4, the mounting surface 111 further includes a second avoidance region 1113, and the second avoidance region 1113 is located within a projection of the second limiting protrusion 13 toward the mounting surface 111 along the thickness direction of the flow plate 11. In response to this, the partition 113 in the flow plate 11 includes a second avoidance partition 1133, a projection of the second avoidance partition 1133 toward the mounting surface 111 along the thickness direction of the flow plate 11 is located in the second avoidance region 1113, and one end of the second avoidance partition 1133 close to the second sealing member 15 is sealingly connected to the second sealing member 15.

Referring to FIG. 1, it can be considered that the second limiting protrusion 13 is connected to the second avoidance region 1113, the second limiting protrusion 13 shields the second avoidance region 1113, and the cell group 01 does not come into contact with the second avoidance region 1113.

Since the flow cavity 112 aligned with the second limiting protrusion 13 along the thickness direction of the flow plate 11 is blocked by the second limiting protrusion 13 and cannot exchange heat with the cell group 01. In view of this, in order to improve the use efficiency of the heat exchange medium, in the embodiments of this disclosure, this part of the flow cavity 112 is also blocked, so that no heat exchange medium flows in this part of the flow cavity 112.

Specifically, for ease of description, the partition 113 whose projection toward the mounting surface 111 along the thickness direction of the flow plate 11 is located in the second avoidance region 1113 may be referred to as the second avoidance partition 1133.

On this basis, one end of the second avoidance partition 1133 close to the second sealing member 15 may be sealingly connected to the second sealing member 15, which is also equivalent to blocking the flow cavity aligned with the second avoidance region, so that no heat exchange medium flows in this part of the flow cavity.

Referring to FIG. 3, the size between one end of the second avoidance partition 1133 close to the second sealing member 15 and the second sealing member 15 may be adaptively set, so that the second avoidance partition 1133 abuts against the second sealing member 15, thereby achieving sealing between the second avoidance partition 1133 and the second sealing member 15. In addition, a sealant, a sealing gasket, or the like, may be provided between the second avoidance partition 1133 and the second sealing member 15 to achieve sealing between the second avoidance partition 1133 and the second sealing member 15.

In this way, in the cooling structure of the battery pack provided by the embodiments of this disclosure, the second avoidance region 1113 is provided on the mounting surface 111 corresponding to the second limiting protrusion 13, and one end of the second avoidance partition 1133 close to the second sealing member 15 is sealingly connected to the second sealing member 15, so that the flow cavity 112 shielded by the second limiting protrusion 13 can also have no heat exchange medium flowing therein, thereby reducing the amount of heat exchange medium used and improving the use efficiency of the heat exchange medium.

On this basis, in the embodiments of this disclosure, the partition 113 further includes a first avoidance partition 1131 and a cell heat exchange partition 1132, a projection of the first avoidance partition 1131 toward the mounting surface 111 along the thickness direction of the flow plate 11 is located in the first avoidance region 1112, and a projection of the cell heat exchange partition 1132 toward the mounting surface 111 along the thickness direction of the flow plate 11 is located in the cell heat exchange region 1111. One end of the first avoidance partition 1131 close to the first sealing member 14 is sealingly connected to the first sealing member 14, and a gap is provided between one end of the first avoidance partition 1131 close to the second sealing member 15 and the second sealing member 15; and gaps are provided between two ends of the cell heat exchange partition 1132 and the first sealing member 14 and the second sealing member 15, respectively.

For the above description, it can be understood with reference to the following description, the partition 113 whose projection toward the mounting surface 111 along the thickness direction of the flow plate 11 is located in the first avoidance region 1112 is the first avoidance partition 1131, and the partition 113 whose projection toward the mounting surface 111 along the thickness direction of the flow plate 11 is located in the cell heat exchange region 1111 is the cell heat exchange partition 1132.

Referring to FIG. 4, it can be understood that the first avoidance partition 1131 can be configured to divide the mounting surface into the first avoidance region 1112. Specifically, it can be considered that the region of the mounting surface corresponding to the first avoidance partition 1131 along the thickness direction of the flow plate 11 forms the first avoidance region 1112. The cell heat exchange partition 1132 can be configured to divide the mounting surface into the cell heat exchange region 1111, it can be considered that the region of the mounting surface corresponding to the cell heat exchange partition 1132 along the thickness direction of the flow plate 11 forms the cell heat exchange region 1111. The second avoidance partition 1133 can be configured to divide the mounting surface into the second avoidance region 1113, it can be considered that the region of the mounting surface corresponding to the second avoidance partition 1133 along the thickness direction of the flow plate 11 forms the second avoidance region 1113.

Furthermore, referring to FIG. 3, the size between one end of the first avoidance partition 1131 close to the first sealing member 14 and the first sealing member 14 may be adaptively set, so that the first avoidance partition 1131 abuts against the first sealing member 14, thereby achieving sealing between the first avoidance partition 1131 and the first sealing member 14. In addition, a sealant, a sealing gasket, or the like, may be provided between the first avoidance partition 1131 and the first sealing member 14 to achieve sealing between the first avoidance partition 1131 and the first sealing member 14.

Furthermore, referring to FIG. 3, the sizes between two ends of the cell heat exchange partition 1132 and the first sealing member 14 and the second sealing member 15 may be adaptively set, so that gaps are provided between two ends of the cell heat exchange partition 1132 and the first sealing member 14 and the second sealing member 15, respectively. In this way, the inlet flow channel 2 is in communication with the outlet flow channel 3 via the gap between the cell heat exchange partition 1132 and the first sealing member, which is in communication with one end of the flow cavity 112 included in the inlet flow channel 2 close to the first sealing member 14, the gap between the cell heat exchange partition 1132 and the second sealing member 15, and the gap between the first avoidance partition 1131 and the second sealing member 15.

In this way, in the cooling structure of the battery pack provided by the embodiments of this disclosure, one end of the first avoidance partition 1131 close to the first sealing member 14 is sealingly connected to the first sealing member 14, the first avoidance partition 1131 can be used to allocate the flow cavity 112 to isolate the inlet flow channel 2 from the outlet flow channel 3 without providing a flow distribution structure at one end of the flow plate 11 close to the first sealing member 14. At the same time, the gap between the cell heat exchange partition 1132 and the first sealing member 14 can be used to communicate the flow cavity 112 corresponding to the cell heat exchange region 1111 at one end close to the first sealing member 14; and the gap between the cell heat exchange partition 1132 and the second sealing member 15 and the gap between the first avoidance partition 1131 and the second sealing member 15 can be used to communicate the flow cavity 112 corresponding to the cell heat exchange region 1111 at one end close to the second sealing member 15 and communicate with the outlet flow channel 3. Through the above settings, additional flow distribution structures can be avoided at two ends of the flow plate 11, thereby making the structure of the cooling structure of the battery pack provided by the embodiments of this disclosure simple and convenient to manufacture.

On this basis, in some embodiments of this disclosure, an inlet 4 is provided at one end of the flow plate 11 close to the first sealing member 14 corresponding to the inlet flow channel 2. Along the second direction b in a direction from the inlet 4 pointing to two ends of the inlet flow channel 2, a gap between the first sealing member 14 and a preceding partition 113 among all partitions 113 included in the cell heat exchange partition 1132 and the second avoidance partition 1133 is greater than or equal to a gap between a subsequent partition 113 and the first sealing member 14.

It should be noted that one end of the flow plate 11 close to the first sealing member 14 refers to one end of the flow plate 11 connected to the first sealing member 14. For example, referring to FIG. 3, one end of the flow plate 11 close to the first sealing member 14 refers to the left end of the first sealing member 14.

Referring to FIG. 3, the inlet 4 is provided at one end of the flow plate 11 close to the first sealing member 14, and at the same time, the inlet 4 is also provided corresponding to the inlet flow channel 2. For example, referring to FIG. 2, the inlet 4 may be provided on the mounting surface 111, and the inlet 4 may be provided at the position where the inlet flow channel 2 is located.

Furthermore, the direction along the second direction b from the inlet 4 pointing to two ends of the inlet flow channel 2 refers to the direction along the second direction b starting from the position where the inlet 4 is located and pointing to two ends of the inlet flow channel 2. Specifically, the above direction can be determined according to the position where the inlet 4 is located.

For example, the inlet 4 may be provided at one end of the inlet flow channel 2. Referring to FIG. 2 and FIG. 3, the inlet 4 may be provided at one end of the inlet flow channel 2 away from the outlet flow channel 3. In response to this, since the inlet 4 is provided at one end of the inlet flow channel 2 away from the outlet flow channel 3, there is only the direction from the inlet 4 pointing to the other end of the inlet flow channel 2.

In addition, the inlet 4 may also be provided at an intermediate position of the inlet flow channel 2, for which the direction along the second direction b from the inlet 4 pointing to two ends of the inlet flow channel 2 refers to the direction from the inlet 4 pointing to one end of the inlet flow channel 2 and the direction from the inlet 4 pointing to the other end of the inlet flow channel 2.

Furthermore, referring to FIG. 3, for providing the inlet 4 at one end of the inlet flow channel 2 away from the outlet flow channel 3, along the second direction b in a direction from the inlet flow channel 2 pointing to the outlet flow channel 3, a gap between the first sealing member 14 and a preceding partition 113 among all partitions 113 included in the cell heat exchange partition 1132 and the first avoidance partition 1131 is greater than or equal to a gap between a subsequent partition 113 and the first sealing member 14, it can be considered that the above gaps between the partitions 113 and the first sealing member 14 form a stepped shape.

For example, for providing the inlet 4 at the intermediate position of the inlet flow channel 2, the above gaps between the partitions 113 and the first sealing member 14 form a triangular shape.

For providing the inlet 4 at other positions of one end of the flow plate 11 close to the first sealing member 14, it can also be understood with reference to the above description.

For ease of description, referring to FIG. 3, for providing the inlet 4 at one end of the inlet flow channel 2 away from the outlet flow channel 3, the gap between the lowermost partition 113 and the first sealing member 1414 may be marked as X1, and the gap between a partition 113 that is immediately adjacent above the lowermost partition 113 and the first sealing member 1414 may be marked as X2. Similarly, and the gap between the uppermost partition 113 among the cell heat exchange partitions 1132 and the first sealing member 1414 may be marked as Xn.

Here, along the second direction b in a direction from the inlet 44 pointing to the outlet flow channel 3, a gap between the first sealing member 14 and a preceding partition 113 among all partitions 113 included in the cell heat exchange partition 1132 and the first avoidance partition 1131 greater than or equal to a gap between a subsequent partition 113 and the first sealing member 14 refers to Xn≤Xn-1≤...X3≤X2≤X1. It should be noted that since Xn is closest to the outlet flow channel 3. Therefore, in some embodiments of this disclosure, Xn may be set to be the smallest, that is, the relationship is set to Xn<Xn-1≤...X3≤X2≤X1.

For example, with reference to the above description, the above Xn, Xn-1, ..., X3, X2, and X1 may have multiple setting manners, Xn, Xn-1, ..., X3, X2, and X1 may be set to Xn<Xn-1<...X3<X2<X1; and Xn, Xn-1, ..., X3, X2, and X1 may also be set to Xn<Xn-1=Xn-2...<X3=X2<X1.

It can be understood that in order to make the flow rate in each flow cavity 112 of the inlet flow channel 22 uniform, the gap between the partition 113 close to the inlet 44 and the first sealing member 1414 needs to be set larger, and the gap between the partition 113 and the first sealing member 1414 in the direction away from the inlet 44 may be set to satisfy the above conditions.

In this way, through the above settings, in the cooling structure of the battery pack provided by the embodiments of this disclosure, the flow rate of the heat exchange medium in the flow cavity 112 of the inlet flow channel 2 can be uniform, and the cooling efficiency of the cooling structure of the battery pack provided by the embodiments of this disclosure on the cell group 01 can be further improved.

On this basis, referring to FIG. 3, along the second direction b in a direction from the inlet flow channel 2 pointing to the outlet flow channel 3, a gap between the second sealing member 15 and a preceding partition 113 among the partitions 113 included in the cell heat exchange partition 1132 and the first avoidance partition 1131 is less than or equal to a gap between a subsequent partition 113 and the second sealing member 15.

Here, the gaps between all partitions 113 included in the cell heat exchange partition 1132 and the first avoidance partition 1131 and the second sealing member 15 are adaptively set, so that the gap between the second sealing member 15 and a preceding partition 113 among the above partitions 113 is less than or equal to the gap between a subsequent partition 113 and the second sealing member 15.

For ease of description, referring to FIG. 3, the gap between the uppermost partition 113 among the partitions 113 included in the cell heat exchange partition 1132 and the first avoidance partition 1131 and the second sealing member 15 may be marked as Yn, and the gap between the partition 113 that is immediately adjacent below the uppermost partition 113 and the second sealing member 15 may be marked as Yn-1. Similarly, the gap between the last partition 113 among the partitions 113 included in the cell heat exchange partition 1132 and the first avoidance partition 1131 and the second sealing member 15 may be marked as Y1.

Here, along the second direction b in a direction from the inlet flow channel 2 pointing to the outlet flow channel 3, a gap between the second sealing member 15 and a preceding partition 113 among the partitions 113 included in the cell heat exchange partition 1132 and the first avoidance partition 1131 less than or equal to a gap between a subsequent partition 113 and the second sealing member 15 refers to Y1≤Y2≤Y3...≤Yn-1≤Yn. It should be noted that since Yn is closest to the outlet 5. Therefore, in some embodiments of this disclosure, Yn may be set to be the largest, that is, the relationship is set to Y1≤Y2≤Y3...≤Yn-1<Yn.

For example, with reference to the above description, the above Y1, Y2, Y3, ..., Yn-1, and Yn may have multiple setting manners, Y1, Y2, Y3, ..., Yn-1, and Yn may be set to Y1<Y2<Y3...<Yn-1<Yn; and Y1, Y2, Y3, ..., Yn-1, and Yn may also be set to Y1<Y2=Y3...Yn-2=Yn-1<Yn.

In this way, through the above settings, in the cooling structure of the battery pack provided by the embodiments of this disclosure, the flow rate of the heat exchange medium in the flow cavity 112 of the inlet flow channel 2 and the outlet flow channel 3 can be further uniform, and the heat exchange medium in each flow cavity 112 can effectively converge to the outlet 5, further improving the cooling efficiency of the cooling structure of the battery pack provided by the embodiments of this disclosure on the cell group 01.

On this basis, in some embodiments of this disclosure, the inlet 4 is aligned with a flow cavity 112 farthest from the outlet flow channel 3, the number of the second avoidance partitions 1133 is the same as the number of the first avoidance partitions 1131, and n is the number of the partitions 113 having a gap with the first sealing member 14 or the second sealing member 15; in the case of 5≤n<10, along the second direction b in a direction from the inlet flow channel 2 pointing to the outlet flow channel 3, gaps between a first partition and a second partition 113 and the first sealing member 14 are the same; in the case of 10≤n<16, along the second direction b in a direction from the inlet flow channel 2 pointing to the outlet flow channel 3, gaps between a first partition, a second partition, and a third partition 113, respectively, and the first sealing member 14 are the same; along the second direction b in a direction from the outlet flow channel 3 pointing to the inlet flow channel 2, gaps between a second partition and a third partition 113 and the second sealing member 15 are the same; in the case of 16≤n, along the second direction b in a direction from the inlet flow channel 2 pointing to the outlet flow channel 3, gaps between a first partition, a second partition, a third partition, and a fourth partition 113, respectively, and the first sealing member 14 are the same; and along the second direction b in a direction from the outlet flow channel 3 pointing to the inlet flow channel 2, gaps between a second partition, a third partition, and a fourth partition 113 and the second sealing member 15 are the same.

Specifically, in the case of 5≤n<10, along the second direction b in a direction from the inlet flow channel 2 pointing to the outlet flow channel 3, gaps between a first partition and a second partition 113 and the first sealing member 14 are the same. In response to this, referring to FIG. 3, it can be considered that in the case of 5≤n<10, X1=X2.

In addition, in the case of 10≤n<16, along the second direction b in a direction from the inlet flow channel 2 pointing to the outlet flow channel 3, gaps between a first partition, a second partition, and a third partition 113, respectively, and the first sealing member 14 are the same; and along the second direction b in a direction from the outlet flow channel 3 pointing to the inlet flow channel 2, gaps between a second partition and a third partition 113 and the second sealing member 15 are the same. In response to this, referring to FIG. 3, it can be considered that in the case of 10≤n<16, X1=X2=X3, and Yn-1=Yn-2.

In addition, in the case of 16≤n, along the second direction b in a direction from the inlet flow channel 2 pointing to the outlet flow channel 3, gaps between a first partition, a second partition, a third partition, and a fourth partition 113, respectively, and the first sealing member 14 are the same; and along the second direction b in a direction from the outlet flow channel 3 pointing to the inlet flow channel 2, gaps between a second partition, a third partition, and a fourth partition 113 and the second sealing member 15 are the same. In response to this, referring to FIG. 3, it can be considered that in the case of n≥16, X1=X2=X3=X4, and Yn-1=Yn-2=Yn-3.

It can be understood that the flow process of the heat exchange medium in the cooling structure is relatively complex, and the flow damping of the heat exchange medium in the cooling structure has multiple different forms. For example, friction resistance or pressure difference resistance, and the like. In addition, there are local resistances generated by changes of a flow direction, the change in cross-sectional area, branching or convergence of the flow channel, and the like.

The cooling structure of the battery pack provided by the embodiments of this disclosure is analyzed, and the flow rate of the heat exchange medium in each flow cavity 112 can be further uniform through the above settings.

In addition, in some embodiments of this disclosure, the flow plate 11 may also be set to be formed by splicing at least two flow sub-plates 11a arranged along the first direction a or the second direction b.

For example, referring to FIG. 2, in some embodiments of this disclosure, two flow sub-plates 11a may be spliced along the second direction b. On this basis, a plurality of flow sub-plates 11a may also be spliced along the second direction b.

In addition, in some embodiments of this disclosure, two flow sub-plates 11a may be spliced along the first direction a. On this basis, a plurality of flow sub-plates may also be spliced along the first direction a.

On this basis, in some embodiments of this disclosure, a plurality of flow sub-plates 11a may also be spliced in a multi-row and multi-column configuration along the first direction a and the second direction b. For example, a plurality of flow sub-plates 11a may be welded together.

In this way, in the cooling structure of the battery pack provided by the embodiments of this disclosure, through different splicing manners between at least two flow sub-plates 11a, the flow plate 11 can have different forming manners, thereby adapting to different cell arrangement manners.

In addition, in order to facilitate the installation of the first sealing member 14 and the second sealing member 15 on the flow plate 11, in some embodiments of this disclosure, the first sealing member 14 and the second sealing member 15 are also specially set.

Specifically, in the embodiments of this disclosure, the first sealing member 14 includes a first base and a first boss, the first boss protrudes from the first base and is embedded in one end of the flow plate 11 corresponding to the first sealing member 14; and/or, the second sealing member 15 includes a second base 151 and a second boss 152, the second boss 152 protrudes from the second base 151 and is embedded in one end of the flow plate 11 corresponding to the second sealing member 15.

It should be noted that the specific structural forms of the first boss and the second boss 152 are not limited here. For example, adaptive settings may be made according to the shape of the outer wall of the flow plate 11.

For example, referring to FIG. 6 and FIG. 7, it can be considered that the flow plate 11 is an annular shell-shaped structure enclosed by the outer wall of the flow plate 11, and the shapes of the first boss and the second boss 152 may be set to shapes adapted to the inner surface of the outer wall of the flow plate 11. Moreover, in order to facilitate the installation of the first boss and the second boss 152 on the inner surface of the outer wall of the flow plate 11, the first boss and the second boss 152 and the inner surface of the flow plate 11 may also be set to have a gap of 0.1 mm to 0.5 mm.

On this basis, when installing the first sealing member 14 or the second sealing member 15 to the flow plate 11, the first boss or the second boss 152 may be first embedded and installed to one end corresponding to the flow plate 11.

It can be understood that after the first boss or the second boss 152 is embedded and installed to one end corresponding to the flow plate 11, the first base can abut against the flow plate 11, and the second base 151 can abut against the flow plate 11, and therefore, the first base and the flow plate 11 can be welded together, and the second base 151 and the flow plate 11 can be welded together, so as to achieve the sealing connection between the first sealing member 14 and the flow plate 11 and the sealing connection between the second sealing member 15 and the flow plate 11.

In this way, the first boss or the second boss 152 can be used to achieve a guiding function for installing the first sealing member 14 or the second sealing member 15 to the flow plate 11, achieving pre-fixing of the first sealing member 14 or the second sealing member 15, thereby reducing the number of positioning fixtures used for installing the first sealing member 14 and the second sealing member 15 to the flow plate 11, thus reducing fixture costs.

In addition, in some embodiments of this disclosure, a range of a gap between a partition 113 having a gap with the first sealing member 14 and the first sealing member 14 is 1.5 mm to 45 mm; and/or, a range of a gap between a partition 113 having a gap with the second sealing member 15 and the first sealing member 14 is 1.5 mm to 45 mm.

It can be understood that in the embodiments of this disclosure, a partition 113 having a gap with the first sealing member 14 or the second sealing member 15 may be set to be greater than or equal to 1.5 mm and less than or equal to 45 mm. For example, referring to FIG. 3, X1 may be set to 45 mm, Xn may be set to 1.5 mm; Y1 may be set to 1.5 mm, and Yn may be set to 45 mm.

In this way, through the above settings, in the cooling structure of the battery pack provided by the embodiments of this disclosure, it can be ensured that a certain gap is provided between the partition 113 and the first sealing member 14 or the second sealing member 15 without the gap being too large, thereby ensuring that the inlet flow channel 2 or the outlet flow channel 3 has a sufficient flow area.

In addition, in the embodiments of this disclosure, among partitions 113 having a gap with the first sealing member 14, a difference in gaps between adjacent partitions 113 and the first sealing member 14 is 0 to 5 mm; and/or, among partitions 113 having a gap with the second sealing member 15, a difference in gaps between adjacent partitions 113 and the second sealing member 15 is 0 to 5 mm.

Specifically, the difference in gaps between adjacent partitions 113 and the first sealing member 14 may be set to be less than or equal to 5 mm, and the difference in gaps between adjacent partitions 113 and the second sealing member 15 may be set to be less than or equal to 5 mm.

In this way, the change in the gap values between adjacent partitions 113 and the first sealing member 14 or the second sealing member 15 can be made not too large, thereby improving the stability of the flow of the heat exchange medium in the cooling structure of the battery pack provided by the embodiments of this disclosure.

In addition, referring to FIG. 8, in some embodiments of this disclosure, along the thickness direction of the flow plate 11, a height D1 of the flow cavity 112 is 4 mm to 10 mm.

It should be noted that the dimension of the flow cavity 112 along the thickness direction of the flow plate 11 may be set to 4 mm, the dimension of the flow cavity 112 along the thickness direction of the flow plate 11 may be set to 10 mm, or the height of the flow cavity 112 along the thickness direction of the flow plate 11 may be set to any value between 4 mm and 10 mm.

In addition, it should be noted that the height of the flow cavity 112 may be set according to the processing process of the flow plate 11, and when the processing process is satisfied, the height of the flow cavity 112 may be set as small as possible.

For example, referring to FIG. 7 and FIG. 8, the relative position in FIG. 8 is taken as an example for description. It can be understood that the thickness direction of the flow plate 11 here refers to the up-down direction in FIG. 7 and FIG. 8.

The dimension of the flow cavity 112 along the thickness direction of the flow plate 11 can be made smaller through the above settings, and the total amount of the heat exchange medium in the cooling structure can be reduced, thereby reducing costs.

In some embodiments of this disclosure, the flow plate 11 and the partition 113 are an integral structure, and the flow plate 11 and the partition 113 are made by an extrusion process.

For example, the flow plate 11 and the partition 113 may be set as aluminum or aluminum alloy, and aluminum or aluminum alloy has good thermal conductivity and processing performance, which can be conveniently processed by an extrusion process.

It should be noted that, referring to FIG. 3, when manufacturing the flow plate 11 and the partition 113, the length of the partition 113 and the length of the flow plate 11 may be first made the same, and then each partition 113 may be processed according to the gap between each partition 113 and the first sealing member 14 or the second sealing member 15.

Through the above settings, the flow plate 11 and the partition 113 are set as an integral structure and are manufactured by an extrusion molding process, which can facilitate the manufacturing of the flow plate 11 and the partition 113.

On this basis, referring to FIG. 7, in the embodiments of this disclosure, the first limiting protrusion 12 and the second limiting protrusion 13 each include a first connection portion 121 and a second connection portion 122, the first connection portion 121 is connected to the mounting surface 111, a projection of the first connection portion 121 toward the mounting surface 111 along the thickness direction of the flow plate 11 is located within the mounting surface 111; a projection of the second connection portion 122 toward the mounting surface 111 along the thickness direction of the flow plate 11 is located outside the mounting surface 111, and the second connection portion 122 is configured to install other structural members.

Specifically, referring to FIG. 7, it can be considered that the first connection portion 121 is a portion of the first limiting protrusion 12 or the second limiting protrusion 13 close to one side of the flow plate 11, and the second connection portion 122 is a portion of the first limiting protrusion 12 or the second limiting protrusion 13 away from one side of the flow plate 11.

In response to this, the second connection portion 122 can be used to install other structural members. For example, for installing the cooling structure in a battery pack, a connection structure may be provided on the second connection portion 122 to connect the cooling structure to the battery pack.

For example, referring to FIG. 7, in some embodiments of this disclosure, the main structures of the first limiting protrusion 12 and the second limiting protrusion 13 may be set as rectangular shell-shaped structures, and one corner portion of the rectangular shell-shaped structure may overlap with the flow plate 11. Furthermore, referring to FIG. 7, part of the structure of the rectangular shell-shaped structure may also be set outside the flow plate 11, and another part of the rectangular shell-shaped structure may be set on one side of the flow plate 11 for installing the cell group 01.

In this way, through the above settings, in the cooling structure of the battery pack provided by the embodiments of this disclosure, the first connection portion 121 can be used to limit the cell group 01, and the second connection portion 122 can be used to install other structures, which can ensure the structural integrity of the flow plate 11.

On this basis, in the cooling structure of the battery pack provided by the embodiments of this disclosure, the flow plate 11, the first limiting protrusion 12, and the second limiting protrusion 13 are also set as an integral structure, and the flow plate 11, the first limiting protrusion 12, and the second limiting protrusion 13 are manufactured by an extrusion process.

For example, the flow plate 11, the first limiting protrusion 12, and the second limiting protrusion 13 may be set as aluminum or aluminum alloy, and aluminum or aluminum alloy has good thermal conductivity and processing performance, which can be conveniently processed by an extrusion process.

Through the above settings, the flow plate 11, the first limiting protrusion 12, and the second limiting protrusion 13 are set as an integral structure and are manufactured by an extrusion molding process, which can facilitate the manufacturing of the flow plate 11, the first limiting protrusion 12, and the second limiting protrusion 13.

Furthermore, the embodiments of this disclosure also provide an electric apparatus, the electric apparatus including the battery pack provided in the foregoing embodiments.

Furthermore, the embodiments of this disclosure also provide an energy storage apparatus, the energy storage apparatus including the battery pack provided in the foregoing embodiments.

Since the electric apparatus or energy storage apparatus provided by the embodiments of this disclosure includes the battery pack provided in any one of the foregoing embodiments, it has the same technical effects, that is, the temperature difference of cells in the cell group can be made smaller, leading to a higher consistency of service life of the cells, thereby improving the overall service life of the cell group.

The foregoing embodiments are merely for describing the technical solutions of this disclosure rather than for limiting this application. Although this disclosure has been described in detail referring to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this disclosure. All such modifications and equivalent replacements shall fall within the scope of claims and specification of this disclosure. In particular, as long as there is no structural conflict, the various technical features mentioned in the embodiments can be combined in any manner. This disclosure is not limited to the specific embodiments disclosed in this specification, but includes all technical solutions falling within the scope of the claims.

## Claims

1. A battery pack, comprising:
a cell group; and
a cooling structure, the cooling structure comprising a casing assembly, an inlet flow channel, and an outlet flow channel; wherein
the casing assembly comprises a flow plate, a mounting surface is formed on a surface of the flow plate, the mounting surface comprises a cell heat exchange region and a first avoidance region, the cell group is disposed in the cell heat exchange region of the cooling structure, the cell heat exchange region is used for heat exchange with the cell group, and the first avoidance region is located outside a projection of the cell group toward the mounting surface along a thickness direction of the flow plate;
the inlet flow channel is disposed in the flow plate corresponding to the cell heat exchange region; and
the outlet flow channel is disposed in the flow plate corresponding to the first avoidance region, the inlet flow channel and the outlet flow channel are used for flowing a heat exchange medium, and the inlet flow channel and the outlet flow channel are communicated to an external pipeline to form a circulation loop.

2. The battery pack according to claim 1, wherein a plurality of flow cavities extending along a first direction are arranged in the flow plate, a flow cavity located at a first end of the flow plate along a second direction among the plurality of flow cavities forms the outlet flow channel, at least part of the flow cavities in other flow cavities form the inlet flow channel, the first direction being perpendicular to the second direction, and flow directions of the inlet flow channel and the outlet flow channel being opposite.

3. The battery pack according to claim 2, wherein the casing assembly further comprises a first sealing member and a second sealing member, a plurality of partitions extending along the first direction are arranged in the flow plate, the flow cavity running through two ends of the flow plate is formed between adjacent partitions, the first sealing member is sealingly connected to one end of the flow plate corresponding to an inlet side of the inlet flow channel, and the second sealing member is sealingly connected to one end of the flow plate corresponding to an outlet side of the inlet flow channel.

4. The battery pack according to claim 3, wherein the casing assembly further comprises a first limiting protrusion, the first limiting protrusion is disposed at the first end of the flow plate along the second direction, the first avoidance region is located within a projection of the first limiting protrusion toward the mounting surface along the thickness direction of the flow plate, and the first limiting protrusion is configured to limit the cell group in the cell heat exchange region.

5. The battery pack according to claim 4, wherein the casing assembly further comprises a second limiting protrusion, the second limiting protrusion is disposed at a second end of the flow plate along the second direction, and the first limiting protrusion and the second limiting protrusion are configured to limit the cell group in the cell heat exchange region.

6. The battery pack according to claim 5, wherein the mounting surface further comprises a second avoidance region, the second avoidance region is located within a projection of the second limiting protrusion toward the mounting surface along the thickness direction of the flow plate; and
the partition comprises a second avoidance partition, a projection of the second avoidance partition toward the mounting surface along the thickness direction of the flow plate is located in the second avoidance region, and one end of the second avoidance partition close to the second sealing member is sealingly connected to the second sealing member.

7. The battery pack according to claim 6, wherein the partition further comprises a first avoidance partition and a cell heat exchange partition, a projection of the first avoidance partition toward the mounting surface along the thickness direction of the flow plate is located in the first avoidance region, and a projection of the cell heat exchange partition toward the mounting surface along the thickness direction of the flow plate is located in the cell heat exchange region; one end of the first avoidance partition close to the first sealing member is sealingly connected to the first sealing member, and a gap is provided between one end of the first avoidance partition close to the second sealing member and the second sealing member; and gaps are provided between two ends of the cell heat exchange partition and the first sealing member and the second sealing member, respectively.

8. The battery pack according to claim 7, wherein an inlet is provided at one end of the flow plate close to the first sealing member corresponding to the inlet flow channel; an outlet is provided at one end of the flow plate close to the first sealing member corresponding to the outlet flow channel; and
along the second direction in a direction from the inlet pointing to two ends of the inlet flow channel, a gap between the first sealing member and a preceding partition among all partitions included in the cell heat exchange partition and the second avoidance partition is greater than or equal to a gap between a subsequent partition and the first sealing member.

9. The battery pack according to claim 7, wherein along the second direction in a direction from the inlet flow channel pointing to the outlet flow channel, a gap between the second sealing member and a preceding partition among all partitions included in the cell heat exchange partition and the first avoidance partition is less than or equal to a gap between a subsequent partition and the second sealing member.

10. The battery pack according to claim 8, wherein the inlet is aligned with a flow cavity farthest from the outlet flow channel, the number of the second avoidance partitions is the same as the number of the first avoidance partitions, and n is the number of partitions having a gap with the first sealing member or the second sealing member;
in the case of 5≤n<10, along the second direction in a direction from the inlet flow channel pointing to the outlet flow channel, gaps between a first partition and a second partition and the first sealing member are the same;
in the case of 10≤n<16, along the second direction in a direction from the inlet flow channel pointing to the outlet flow channel, gaps between a first partition, a second partition, and a third partition, respectively, and the first sealing member are the same; along the second direction in a direction from the outlet flow channel pointing to the inlet flow channel, gaps between a second partition and a third partition and the second sealing member are the same;
in the case of 16≤n, along the second direction in a direction from the inlet flow channel pointing to the outlet flow channel, gaps between a first partition, a second partition, a third partition, and a fourth partition, respectively, and the first sealing member are the same; and along the second direction in a direction from the outlet flow channel pointing to the inlet flow channel, gaps between a second partition, a third partition, and a fourth partition and the second sealing member are the same.

11. The battery pack according to any one of claims 3 to 10, wherein the flow plate is formed by splicing at least two flow sub-plates arranged along the first direction or the second direction.

12. The battery pack according to any one of claims 3 to 10, wherein the first sealing member comprises a first base and a first boss, the first boss protrudes from the first base and is embedded in one end of the flow plate corresponding to the first sealing member; and/or, the second sealing member comprises a second base and a second boss, the second boss protrudes from the second base and is embedded in one end of the flow plate corresponding to the second sealing member.

13. The battery pack according to any one of claims 3 to 10, wherein a range of a gap between a partition having a gap with the first sealing member and the first sealing member is 1.5 mm to 45 mm; and/or, a range of a gap between a partition having a gap with the second sealing member and the first sealing member is 1.5 mm to 45 mm.

14. The battery pack according to any one of claims 3 to 10, wherein among partitions having a gap with the first sealing member, a difference in gaps between adjacent partitions and the first sealing member is 0 to 5 mm; and/or, among partitions having a gap with the second sealing member, a difference in gaps between adjacent partitions and the second sealing member is 0 to 5 mm.

15. The battery pack according to any one of claims 3 to 10, wherein along the thickness direction of the flow plate, a height of the flow cavity is 4 mm to 10 mm.

16. The battery pack according to any one of claims 3 to 10, wherein the flow plate and the partition are an integral structure, and the flow plate and the partition are made by an extrusion process.

17. The battery pack according to claim 5, wherein the first limiting protrusion and the second limiting protrusion each comprise a first connection portion and a second connection portion, the first connection portion is connected to the mounting surface, a projection of the first connection portion toward the mounting surface along the thickness direction of the flow plate is located within the mounting surface; a projection of the second connection portion toward the mounting surface along the thickness direction of the flow plate is located outside the mounting surface, and the second connection portion is configured to install other structural members.

18. The battery pack according to claim 17, wherein the flow plate, the first limiting protrusion, and the second limiting protrusion are an integral structure, and the flow plate, the first limiting protrusion, and the second limiting protrusion are made by an extrusion process.

19. An electric apparatus, comprising the battery pack according to any one of claims 1 to 18.

20. An energy storage apparatus, comprising the battery pack according to any one of claims 1 to 18.
